Europäisches Patentamt

European Patent Office

Office européen des brevets

(19)

(11) Publication number: **0 163 447**
**A2**

(12) # EUROPEAN PATENT APPLICATION

(21) Application number: **85303353.8**

(22) Date of filing: **13.05.85**

(51) Int. Cl.⁴: **F 16 C 1/02**

(30) Priority: **15.05.84 GB 8412411**

(43) Date of publication of application:
**04.12.85 Bulletin 85/49**

(84) Designated Contracting States:
**DE GB**

(71) Applicant: **Williams, Geoffrey Hugh**
**31 Talboys Walk**
**Tetbury Glos. GL8 8YU(GB)**

(71) Applicant: **Dowling, Stephen David William**
**70 Brockworth**
**Yate Bristol BS17 4SL(GB)**

(72) Inventor: **Williams, Geoffrey Hugh**
**31 Talboys Walk**
**Tetbury Glos. GL8 8YU(GB)**

(72) Inventor: **Dowling, Stephen David William**
**70 Brockworth**
**Yate Bristol BS17 4SL(GB)**

(54) Flexible shaft coupling.

(57) A coupling device is described wherein the normal features and performance of a flexible coupling are preserved. Previously known couplings are difficult or inconvenient to dismantle. The coupling described has a special construction that allows easy dismantling of the coupling and disconnection of the driving system.

Part of the coupling comprises a segmented ring (2) the parts of which may be easily removed in radial directions. In turn the flexible blocks or pieces (3) may be readily removed in a similar manner. Further, removal of the segmented ring allows either the driving or driven hub, and the associated machines, to be removed at right angles to the principal axis of the coupling.

FIG 1

SECTION BB

EP 0 163 447 A2

- 1 -

## FLEXIBLE SHAFT COUPLING

The invention relates to a coupling for joining shafts and similar machine elements comprising a driving hub and a driven hub attached to further members associated with flexible pieces whereby driving forces are transmitted from one hub to the other, thus a driving torque is transmitted from one shaft, or similar machine element to the other.

Flexible shaft couplings allow driving torques to be transmitted in a satisfactory manner even when the respective shafts or similar machine elements are not in perfect alignment. In addition flexible shaft couplings can attenuate torsional vibrations.

There already exists a number of different types of flexible shaft couplings designed to operate in the manner described above.

In most designs of flexible shaft coupling it is difficult or inconvenient to disconnect the coupling device for maintenance or repair of either the coupling or the driving or driven machine. Such disconnection normally requires one or other, or both of the said machines to be moved, often in a direction parallel to the axes of the coupled shafts.

The invention as claimed overcomes the difficulty described above and similar difficulties by providing a flexible shaft coupling which may be dismantled by removing certain components in directions substantially at right angles to the principal axis of the coupling, thus permitting the coupling, shaft, driving or driven machine to be removed in directions at right angles to the shaft axis, with the minimum disruption.

This feature is particularly desirable where 3 machine elements are installed in a line where the middle of the 3 machine elements may be removed without disturbing the two end machines. Included in the components that may readily be removed in a direction substantially at right angles to the said principal axis of the coupling may be the flexible elements, thus said elements may be readily replaced when required with the minimum of dismantling and re-assembly.

A specific embodiment of the invention will now be described by way of example with reference to the accompanying drawings in which:

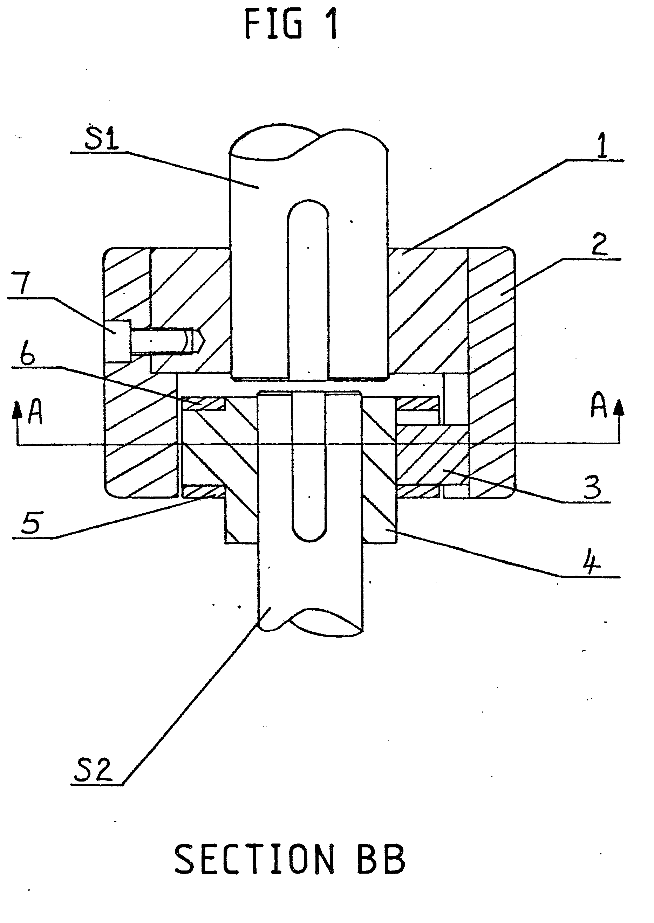

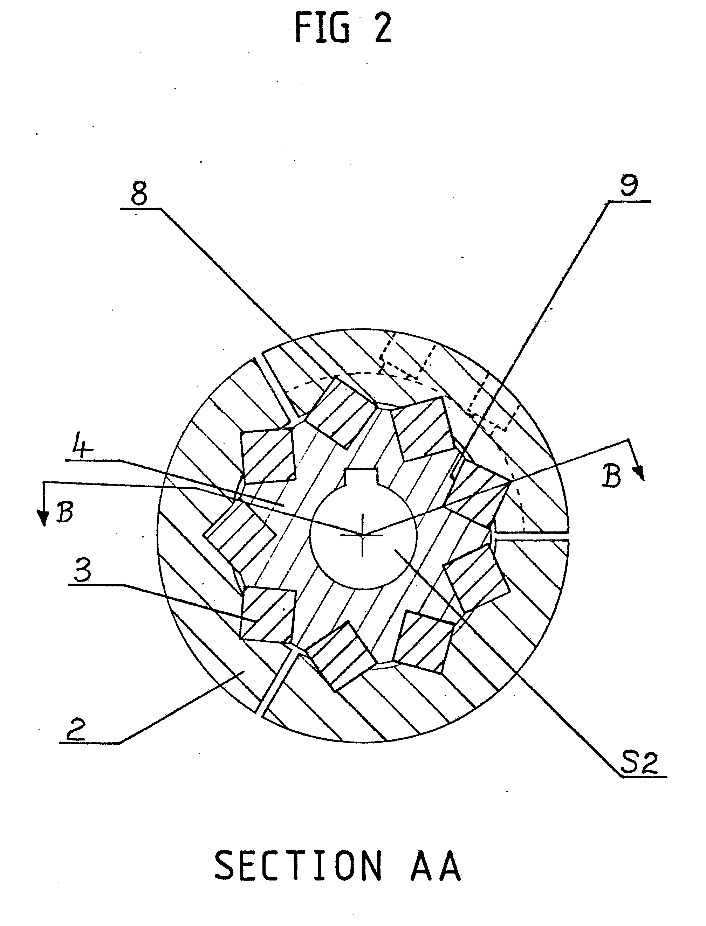

Fig. 1 shows a cross section along the axis of the shafts showing driving and driven shafts, connected by a representative coupling. Fig. 2 shows a cross section at right angles to the shaft axis showing the components of a representative coupling.

Referring to the drawings the coupling comprises a driving hub 1. which is connected to the driving shaft S1. A keyed connection is shown but a variety of designs may be used depending on the application. A segmented ring 2. is fixed to the driving hub 1. by securing means 7. This version uses securing means which are inserted at right angles to the shaft axis. Alternative designs which use securing means parallel to the shaft axis are equally possible. The segmented ring 2. is shown in 3 portions for illustration. Alternative designs having a greater or lesser number of segments could be appropriate for different applications.

The segmented ring 2. has shaped features 8. which co-operate with flexible "rubber" pieces 3. The term "rubber" is used to include a wide variety of plastics and elastomeric materials, used with or without fillers, strengthening media or voids to adjust their strength and/or stiffness characteristics. Safety features may be incorporated if desired whereby the coupling is disengaged by the total failure of a suitably weak material. Alternatively, other features may be provided which provide a reversionary mode of drive in the event of an overload causing a failure of the "rubber" pieces.

The rubber pieces 3. in turn co-operate with shaped features 9. on the driven hub 4. thus providing the ability to transmit power or torque.

The driven hub 4. has fixed to it 2 rings, 5. & 6. which restrain the rubber blocks axially. Other designs where this feature is integral with the driven hub or the segmented ring are desirable in some cases for ease of production.

The driven hub 4. is connected to the driven shaft S2. In this example a keyed connection is shown, but a variety of other connections are possible for other applications.

CLAIMS

1. Coupling for joining shafts and similar machine elements, comprising a driving hub (1), a driven hub (4), a circumferential member (2), attached to said driving hub, and cooperating with a number of flexible pieces (3), said driven hub also cooperating with the flexible pieces, characterised in that the circumferential member may be readily removed without the disturbance of the remaining parts of the coupling.

2. A coupling as claimed in Claim 1, wherein the circumferential member (2), is divided into a number of sectors.

3. A coupling as claimed in Claim 2, wherein the manner of mounting the sectors of the circumferential member (2) allows removal of one or a number of said sectors in an essentially radial direction.

4. A coupling as claimed in Claim 3, wherein the removal of one or a number of said sectors allows the associated flexible pieces to be removed.

5. A coupling as claimed in Claim 4, wherein the removal of one or a number of said sectors allows the associated flexible pieces to be removed in an essentially radial direction.

6. A coupling as claimed in Claim 4, wherein the removal of one or a number of said sectors allows the associated flexible pieces to be removed in an essentially axial direction.

7.    A coupling as claimed in Claim 3, wherein the removal of a number of sectors of the circumferential member (2) allows the direct removal of either the driving or driven hub, and associated machine, in a direction substantially at right angles to the principal axis of the coupling.

8.    A coupling as described by example demonstrating a specific embodiment.

# FIG 1

SECTION BB

SECTION AA